# EUROPEAN PATENT SPECIFICATION

(11) **EP 4 606 210 B1**
(45) Date of publication and mention of the grant of the patent: **11.03.2026**
(21) Application number: 24159569.3
(22) Date of filing: 26.02.2024
(51) Int. Cl.: A01G 3/025, B25G 1/04

(54) **TELESCOPIC HAND TOOL, IN PARTICULAR TELESCOPIC PRUNER**
TELESKOPISCHES HANDWERKZEUG, INSBESONDERE TELESKOPPFLAUMMASCHINE
OUTIL À MAIN TÉLESCOPIQUE, EN PARTICULIER SÉCATEUR TÉLESCOPIQUE

(43) Date of publication of application: 27.08.2025
(73) Proprietor: Husqvarna AB, 561 82 Huskvarna (SE)
(72) Inventor: Rudolf, Peter, 89250 Senden (DE); Juchem, Jonas, 55743 Idar-Oberstein (DE); Müller-Braun, Matthias, 89233 Neu-Ulm (DE)
(74) Representative: Finkele, Rolf

(56) References cited:
- EP-B1- 2 022 320
- CN-U- 206 341 625
- CN-U- 210 746 173
- CN-U- 216 492 145
- GB-A- 2 605 369
- JP-A- 2000 334 181
- US-B1- 10 328 568

## Description

The present invention relates to a telescopic hand tool. In particular, the present invention relates to a telescopic pruner. Telescopic hand tools with two tubes and an integrated pulling means are well known. In many telescopic hand tools, the pulling means is visible and guided in grooves formed in the tube. Telescopic hand tools with three tubes have usually pulling means running outside of the tube. Three tubes allow a small minimum length and a large maximum length of the telescopic hand tool. CN210746173U, CN206341625U, EP2022320B1 and GB2605369A disclose examples of a telescopic hand tool having multiple tubes, a tool head, a back handle, pulling means and a number of pulleys.

It is an object of the present invention to provide a telescopic hand tool with at least three tubes, wherein the pulling means is arranged substantially inside the telescopic hand tool and said telescopic hand tool is easy to operate by the user.

The object of the present invention is achieved by a telescopic hand tool according to claim 1.

The present invention provides a telescopic hand tool, in particular for a telescopic pruner, wherein the telescopic hand tool comprises:
- an outer tube,
- at least one intermediate tube slidable within the outer tube,
- an inner tube slidable within the intermediate tube,
- at least one tool head connected or connectable to the front end of the inner tube,
- a back handle detachably arranged at the back end of the outer tube,
- a pulling means arranged substantially inside the tubes, wherein one end of the pulling means is connected to the back handle, while another end of the pulling means is connected to a fixing point at the front end of the outer tube,
- a number of deflection pulleys arranged at the back ends of the tubes and at the front ends of the outer tube and intermediate tube, wherein the deflection pulleys are provided for redirecting the pulling means,
- a hoist pulley slidable within the inner tube and connected to the tool head by at least one rod, band, or further cord, wherein the hoist pulley is provided for redirecting the pulling means such that an operator force is amplifiable,
- a pull sleeve connected to the pulling means and slidable along the outer tube, and
- at least one elongated channel arranged at the outer side of the outer tube and extending parallel to the longitudinal axis of said outer tube, wherein
- at least one portion of the pulling means is guided within the channel.

The pulling mean according to the present invention may particularly be a pull band or a pull cord. Preferably, the pulling means may be formed as a flat pull band having a rectangular cross-sectional shape. Alternatively, the pulling means may be formed as a circular cord.

The pulling means is moveable by the back handle as well as by the pull sleeve. The bigger part of the pulling means is arranged inside the tubes and is invisible. Only the at least one portion of the pulling means, which is guided within the channel, is visible. The arrangement of the deflection pulleys provide a length compensation of the pulling means and allow that the pulling means is arranged substantially inside the tubes.

Thereby, using a pull sleeve in addition to a pull handle may be used for cutting objects in a convenient, fail save and easy way. E.g., touching of moving parts of the pulling means at a lower end of the telescopic cutting tool may be inhibited.

Further, the telescopic hand tool may include at least two telescopic interfaces, wherein a first telescopic interface connects the outer tube and the intermediate tube, while a second telescopic interface connects the intermediate tube and the inner tube. Further, the first telescopic interface is configured to allow clamping of the outer tube relative to the intermediate tube, while the second telescopic interface is configured to allow clamping of the intermediate tube relative to the inner tube.

Providing the telescopic hand tool with the two telescopic interfaces according to the present invention may provide the advantage that the tube guidance between two tubes is free of relative movement to each other respectively backlash. Further, providing the two telescopic interfaces may inhibit that the material of the two tubes rub directly on each other. Hence, advantageously, fretting may be inhibited. Additionally, the first telescopic interface and/or the second telescopic interface comprise(s) the deflection for the length adaption during telescopic as well as an end stop such that the two tubes may not be entirely separated from each other. Arranging the deflection pulley and the guiding pulley in the telescopic interface may provide the advantage that a pulling means distance may be optimized, and hence a size of the telescopic interface may be minimized. Further, the deflection of the pulling means according to the invention may provide the advantage that a pull sleeve for cutting may be used.

For example, the channel has an Ω-shaped cross-section. The Ω-shaped cross-section encloses a big part of the circumference of the pulling means, so that the pulling means is well protected. Alternatively, the channel may have a rectangular cross-section. In particular, a first portion of the pulling means extending between the back handle and a first deflection pulley arranged at the front end of the outer tube, is guided within the channel, wherein the pull sleeve is connected to the first portion of the pulling means, and wherein preferably the first deflection pulley is arranged at the outer side of the outer tube and inside the first telescopic interface. The back handle as well as the pull sleeve is connected to the first portion of the pulling means.

Furthermore, a second portion of the pulling means extending between the first deflection pulley and a second deflection pulley arranged at or close to the back end of the outer tube is guided within the channel. The first portion and the second portion of the pulling means within the at least one channel are the only partially visible parts of the pulling means. Additionally, the first portion and the second portion of the pulling means guided within the elongated channel are arranged one above the other such that solely one of the first portion and the second portion of the pulling means is visible at an outer side of the outer tube to a user. Thereby, the protection of the pulling means may be increased.

According to one example, the first and second portions of the pulling means are guided within one channel, wherein the first and second portions of the pulling means are arranged to one another within said channel, and wherein preferably the first and second portions of the pulling means are arranged side-by-side in a radial direction relating to the outer tube. The first deflection pulley allows a sufficient distance between the first and second portions of the pulling means.

According to an alternative exemplary embodiment in which the pulling means is formed as a circular cord having a circular cross-section, two elongated channels are arranged at the outer side of the outer tube, and extend parallel to each other, wherein the first portion of the circular cord is guided in one of the two channels, and the second portion of the circular cord is guided within the other parallel one of said two channels. Further, an axis of rotation of the fist deflection pulley is arranged inclined such that during deflection a lateral offset of the circular cord is achieved. Thereby, by guiding each of the first portion of the circular cord and the second portion of the circular cord in two parallel channels, friction between the first portion and the second portion of the circular cord may be prevented.

Moreover, an end sleeve may be arranged at the back end of the outer tube, wherein preferably the second deflection pulley is arranged inside said end sleeve and the back handle is detachably mounted at the end sleeve. The back handle is detachably mounted to the end sleeve such that the end sleeve remains in contact with the back end of the outer tube and the end sleeve is pulled away from the end sleeve for performing a cutting action.

Further, a stop cam may be attached at the outer side of the outer tube, wherein the pull sleeve is slidable between said stop cam and the end sleeve.

Preferably, the deflection pulleys and/or the hoist pulley are provided for redirecting the pulling means by about 180 degrees.

Additionally, a guiding pulley may be dedicated to at least one deflection pulley, so that the pulling means takes an S-shaped course between the guiding pulley and the corresponding deflection pulley. Providing the guiding pulley with the deflection pulley may ensure that the pulling means is securely guided in a defined way at the deflection pulley. Furthermore, the guiding pulley may ensure that a distance between different portions of the pulling means. Thereby, a tube diameter may be reduced respectively minimized.

In particular, a plastic tube encloses partially the outer tube and covers a part of the at least one channel, wherein preferably the plastic tube extends between the first telescopic interface and the stop cam. The plastic tube covers a part of the pulling means guided in the at least one channel and minimises the visible part of the pulling means. Further, the plastic tube may provide an electrical insulation for the outer tube, the intermediate tube and/or the inner tube. Thereby, the telescopic hand tool may be safely used in different applications, e.g., for cutting trees near an overhead power line.

Preferably, the back handle is formed as a T-shaped handle. The T-shaped handle may be lighter in weight compared to a D-shaped handle. Further, the T-shaped handle may allow the user to operate the telescopic cutting tool at a maximum length. Therefore, the T-shaped handle is easy to handle for the user.

For example, the maximum length of the telescopic hand tool is between 3 m and 5 m, in particular about 4 m, while the minimum length of the telescopic hand tool is between 1.5 m and 2.0 m, in particular about 1.7 m. The maximum length between 3 m and 5 m may allow a wide variety of possible applications. At the same time, the minimum length between 1.5 m and 2 m allow a small and easy to handle storage length. Hence, the telescopic hand tool may simultaneously be easy to store and be used in different applications.

At last, the telescopic hand tool comprises one or more further intermediate tubes, wherein the further intermediate tube includes at least two deflection pulleys arranged at the front end and back end, respectively, of the said further intermediate tube, and wherein the further intermediate tube is arranged between the outer tube and intermediate tube and/or between the intermediate tube and the inner tube. The telescopic hand tool with the further intermediate tubes allows an increased ratio between the maximum and minimum length of the telescopic hand tool.

Novel and inventive features of the present invention are set forth in the appended claims.

The present invention will be described in further details with reference to the accompanied drawings, in which
- Figure 1: illustrates a schematic sectional side view of an arrangement of a pulling means between the tubes of a telescopic hand tool according to a preferred embodiment of the present invention,
- Figure 2: illustrates a schematic enlarged sectional side view of the telescopic hand tool with maximum length according to the preferred embodiment of the present invention,
- Figure 3: illustrates a schematic top view of the telescopic hand tool with maximum length according to the preferred embodiment of the present invention,
- Figure 4: illustrates a schematic enlarged sectional side view of the telescopic hand tool with minimum length according to the preferred embodiment of the present invention, and
- Figure 5: illustrates a schematic top view of the telescopic hand tool with minimum length according to the preferred embodiment of the present invention.

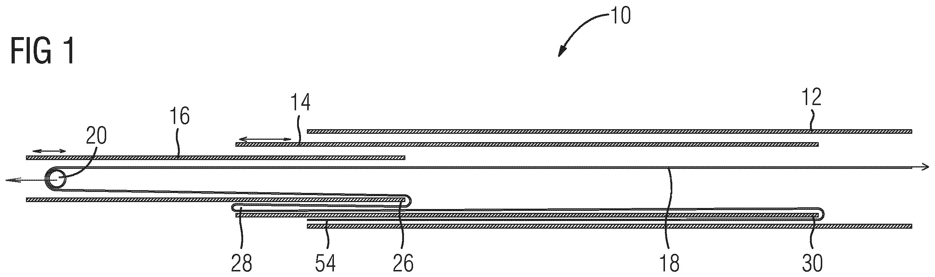

Figure 1 illustrates a schematic sectional side view of an arrangement of a pulling means 18 between the tubes 12, 14 and 16 of a telescopic hand tool 10 according to a preferred embodiment of the present invention. In this example, the telescopic hand tool 10 is a telescopic pruner.

The front end of the telescopic hand tool 10 is arranged on the left-hand side in Figure 1, while the back end of the telescopic hand tool 10 is arranged on the right-hand side in Figure 1. The front end of the telescopic hand tool 10 is configured to receive a tool head. The back end of the telescopic hand tool 10 is configured to receive a back handle.

The telescopic hand tool 10 comprises an outer tube 12, an intermediate tube 14 and an inner tube 16. The inner tube 16 is slidable within the intermediate tube 14 along their common longitudinal axis. In turn, the intermediate tube 14 is slidable within the outer tube 12 along their common longitudinal axis. The outer tube 12, the intermediate tube 14 and the inner tube 16 are arranged coaxially.

A hoist pulley 20 is arranged inside the inner tube 16. The hoist pulley 20 is slidable along the longitudinal axis of the inner tube 16. The pulling means 18 from the back end of the telescopic hand tool 10 is redirected by the hoist pulley 20. First and second deflection pulleys are arranged at the outer tube 12. The first and second deflection pulleys are not shown in Figure 1. A third deflection pulley 26 is arranged at the back end of the inner tube 16. The third deflection pulley 26 redirects the pulling means 18 from the hoist pulley 20.

A fourth deflection pulley 28 is arranged at the front end of the intermediate tube 14. The fourth deflection pulley 28 redirects again the pulling means 18 from the third deflection pulley 26. The portion of the pulling means 18 between the third deflection pulley 26 and fourth deflection pulley 28 extends between the inner tube 16 and the intermediate tube 14.

A fifth deflection pulley 30 is arranged at the back end of the intermediate tube 14. The portion of the pulling means 18 between the fourth deflection pulley 28 and the fifth deflection pulley 30 extends along the inner side of the intermediate tube 14. The fifth deflection pulley 30 redirects again the pulling means 18 from the fourth deflection pulley 28, so that the last portion of the pulling means 18 extends between the intermediate tube 14 and the outer tube 12. A fixing point 54 for the pulling means 18 is arranged at the front end of the inner side of the outer tube 12.

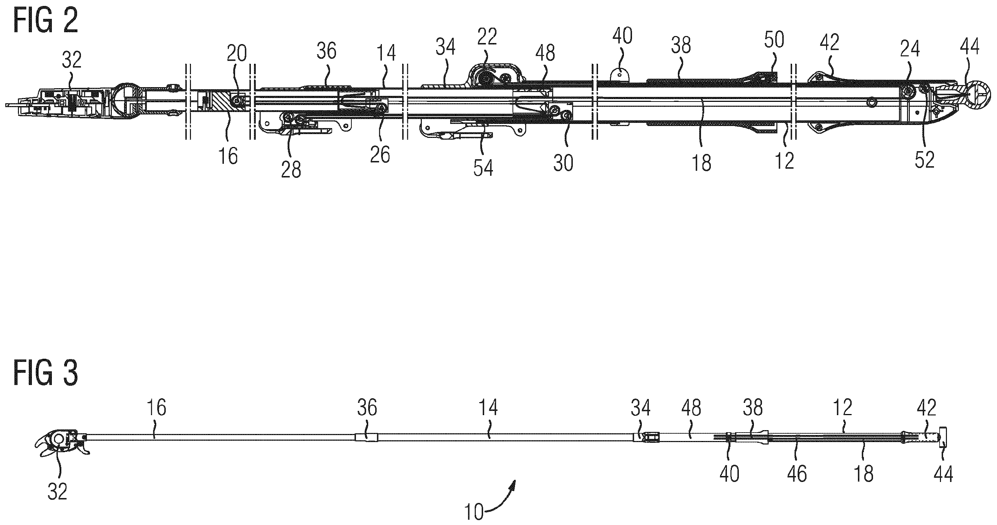

Figure 2 illustrates a schematic enlarged sectional side view of the telescopic hand tool 10 with maximum length according to the preferred embodiment of the present invention.

The telescopic hand tool 10 comprises the outer tube 12, the intermediate tube 14 and the inner tube 16. The inner tube 16 is slidable within the intermediate tube 14 along their common longitudinal axis. In turn, the intermediate tube 14 is slidable within the outer tube 12 along their common longitudinal axis.

A tool head 32 is arranged at the front end of the telescopic hand tool 10 and connected to the front end of the inner tube 16. In this example, the tool head 32 includes a pair of pruning shears. A first telescopic interface 34 is arranged at the front end of the outer tube 12. The first telescopic interface 34 connects the outer tube 12 and the intermediate tube 14. A second telescopic interface 36 is arranged at the front end of the intermediate tube 14. The second telescopic interface 36 connects the intermediate tube 14 and the inner tube 16. In the illustrated elongated configuration, the back end of the inner tube 16 is positioned next to the front end of the intermediate tube 14 at a second telescopic interface 36. Further, the back end of the intermediate tube 14 is positioned next to the front end of the outer tube 12 at a first telescopic interface 34.

A pull sleeve 38 encloses the outer tube 12. The pull sleeve 38 is slidable along the outer tube 12. A stop cam 40 is attached at the outer side of the outer tube 12 in order to limit the sliding section of the pull sleeve 38. An end sleeve 42 encloses the back end of the outer tube 12. The pull sleeve 38 is slidable between the stop cam 40 and the end sleeve 42 along the outer tube 12. A back handle 44 is detachably mounted at the end sleeve 42.

The pulling means 18 is arranged inside the tubes 12, 14 and 16 to a great extent. The one end of the pulling means 18 is connected to the back handle 44, while the other end of the pulling means 18 is connected to the fixing point 54 arranged at the front end of the inner side of the outer tube 12. A first portion of the pulling means 18 extends from the back handle 44 to the first deflection pulley 22 arranged within the first telescopic interface 34 and out of the outer tube 12. The first deflection pulley 22 redirects the pulling means 18. The first portion of the pulling means 18 is connected to the pull sleeve 38 by a fixation 50.

A guiding pulley 52 inside the end sleeve 42 is provided for guiding the first portion of the pulling means 18 along the outer tube 12 such that touching itself of the pulling means in the area of the fourth deflection pulley 28 is substantially inhibited. A further guiding pulley is dedicated to the first deflection pulley 22, so the pulling means 18 takes an S-shaped course between the first deflection pulley 22 and said further guiding pulley. Thereby, a pulling means distance is optimized, particularly minimized such that the dimension of the cross-section of a tube in which the pulling means is guided is optimized, particularly minimized.

A second portion of the pulling means 18 extends from the first deflection pulley 22 to the second deflection pulley 24 arranged within the end sleeve 42 and/or inside the outer tube 12. The second deflection pulley 24 redirects the pulling means 18 again. The first portion and the second portion of the pulling means 18 are guided either along the outer side of the outer tube 12 or within an elongated channel 46, which is formed at the outer side of the outer tube 12 and extends parallel to the longitudinal axis of said outer tube 12. The first portion and the second portion of the pulling means 18 guided within the elongated channel 46 are arranged one above the other such that solely one of the first portion and the second portion of the pulling means 18 is visible at an outer side of the outer tube 12. A plastic tube 48 extends between the first telescopic interface 34 and the stop cam 40 and encloses the outer tube 12. The plastic tube 48 covers partially the first and second portions of the pulling means 18 and/or the channel 46, respectively, between the first telescopic interface 34 and the stop cam 40.

A third portion of the pulling means 18 extends from the second deflection pulley 24 to the hoist pulley 20 and extends inside the outer tube 12, the intermediate tube 14 and the inner tube 16 along the longitudinal axis of said tubes 12, 14 and 16. The hoist pulley 20 is slidable along the inner tube 12 and connected to the tool head 32 by a rod, a band or a further cord. The hoist pulley 20 redirects the pulling means 18 again.

A fourth portion of the pulling means 18 extends from the hoist pulley 20 to the third deflection pulley 26 and inside the inner tube 16. The third deflection pulley 26 is arranged at the back end of the inner tube 16 and redirects again the pulling means 18 from the hoist pulley 20. The third deflection pulley 26 is arranged at an end edge of the inner tube 16. The fourth portion of the pulling means 18 extends along on inner surface of the inner tube 16.

A fifth portion of the pulling means 18 extends from the third deflection pulley 26 to the fourth deflection pulley 28 and between the inner tube 16 and the intermediate tube 14. The fourth deflection pulley 28 is arranged at the front end of the intermediate tube 14. The fourth deflection pulley 28 redirects the pulling means 18 again. The fourth deflection pulley 28 is arranged at an inner surface of the intermediate tube 14 at a position approximately at the front end of the intermediate tube 14. The fifth portion of the pulling means 18 extends along on outer surface of the inner tube 16.

A sixth portion of the pulling means 18 extends from the fourth deflection pulley 28 to the fifth deflection pulley 30 along the inner side of the intermediate tube 14. The fifth deflection pulley 30 is arranged at the back end of the intermediate tube 14. The fifth deflection pulley 30 redirects again the pulling means 18. The end of the pulling means 18 is connected to the fixing point 54 at the inner side of the outer tube 12 in the area of the first telescopic interface 34. The fifth deflection pulley 30 is arranged at an end edge of the intermediate tube 14. The sixth portion of the pulling means 18 extends along the inner surface of the intermediate tube 14 and in a part next to the fourth deflection pulley 28 in proximity to the fifth portion of the pulling means 18.

The tool head 32 can be operated by pulling the back handle 44 or by shifting the pull sleeve 38. On the one hand, the first portion of the pulling means 18 is connected to the pull sleeve 38 by the fixation 50. On the other hand, the first portion of the pulling means 18 is connected to the back handle 44.

Figure 3 illustrates a schematic top view of the telescopic hand tool 10 with maximum length according to the preferred embodiment of the present invention. In this example, the maximum length of the telescopic hand tool 10 is about 4 m.

The plastic tube 48 extends between the first telescopic interface 34 and the stop cam 40 and encloses the outer tube 12. The plastic tube 48 covers the pulling means 18 and/or the channel 46, respectively, between the first telescopic interface 34 and the stop cam 40. The pulling means 18 is only visible between the stop cam 40 and the end sleeve 42. The pulling means 18 is mostly invisible and therefore protected from sunlight, dirt, and mechanical damages. Additionally, the first portion and the second portion of the pulling means 18 guided within the elongated channel 46 are arranged one above the other such that solely one of the first portion and the second portion of the pulling means 18 is visible at an outer side of the outer tube 12. Thereby, the protection of the pulling means 18 may be increased.

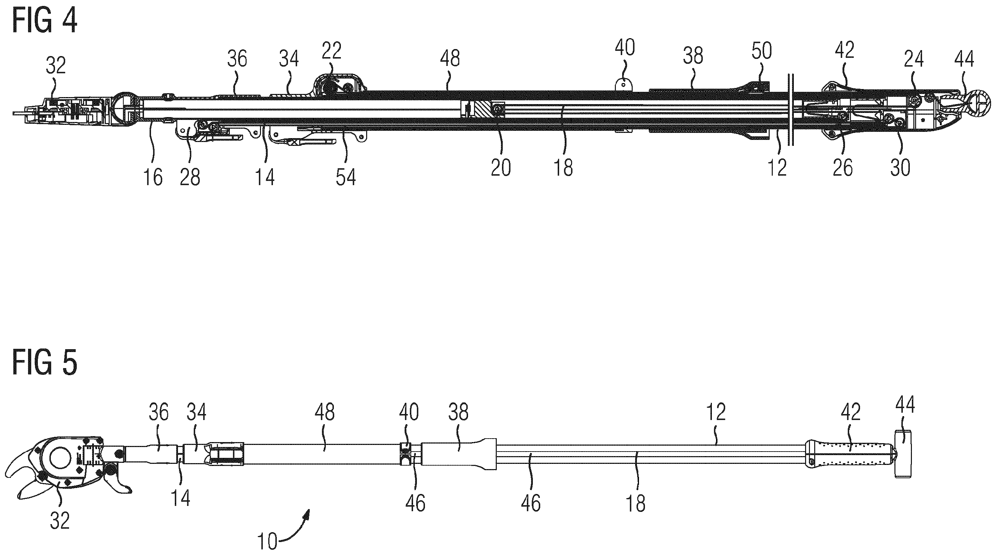

Figure 4 illustrates a schematic enlarged sectional side view of the telescopic hand tool 10 with minimum length according to the preferred embodiment of the present invention.

At the telescopic hand tool 10 with minimum length the tubes 12, 14 and 16 are pushed substantially into one another. The first telescopic interface 34 and the second telescopic interface 36 are arranged directly in series respectively adjacent to each other. The second telescopic interface 36 is arranged directly behind respectively next to the tool head 32. The hoist pulley 20 is arranged halfway inside the telescopic hand tool 10. The third deflection pulley 26 and the fifth deflection pulley 30 are arranged within the end sleeve 42. The fourth deflection pulley 28 is arranged close to the tool head 32. The deflection pulleys 26, 28 and 30 compensate the length of the pulling means 18, so that the pulling means 18 is always in a stretched state.

Figure 5 illustrates a schematic top view of the telescopic hand tool 10 with minimum length according to the preferred embodiment of the present invention. In this example, the minimum length of the telescopic hand tool 10 is about 1.7 m.

At minimum length, the first telescopic interface 34, the second telescopic interface 36 and the tool head 32 are directly arranged in series. In this configuration, the pulling means 18 is only visible between the stop cam 40 and the end sleeve 42 during operation. The invisible pulling means 18 is protected from sunlight, dirt, and mechanical damages. Additionally, the first portion and the second portion of the pulling means 18 guided within the elongated channel 46 are arranged one above the other such that solely one of the first portion and the second portion of the pulling means 18 is visible at an outer side of the outer tube 12. Thereby, protection of the pulling means 18 may be increased.

Preferably, the tubes 12, 14 and 16 are made of metal, in particular aluminium.

According to the present invention the pulling means 18 is moveable by the back handle 44 as well as by the pull sleeve 38. The bigger part of the pulling means 18 is arranged inside the tubes 12, 14 and 16 and is invisible. Only the first portion of the pulling means 18, which is guided within the channel 46, is visible. The arrangement of the deflection pulleys 22, 24, 26, 28 and 30 provide a length compensation of the pulling means 18 and allow that the pulling means 18 is arranged substantially inside the tubes 12, 14 and 16.

The embodiments of the telescopic hand tool 10 described above include three tubes 12, 14 and 16. In general, the telescopic hand tool 10 may include one or more intermediate tubes 14. The further intermediate tubes comprise two deflection pulleys in each case, wherein one deflection pulley is arranged at the front end and the other one is arranged at the back end of the further intermediate tube.

Although an illustrative embodiment of the present invention has been described herein with reference to the accompanying drawings, it is to be understood that the present invention is not limited to that precise embodiment, and that various other changes and modifications may be affected therein by one skilled in the art without departing from the scope of the invention. All such changes and modifications are intended to be included within the scope of the invention as defined by the appended claims.

### Reference Numerals

- 10: telescopic hand tool
- 12: outer tube
- 14: intermediate tube
- 16: inner tube
- 18: pulling means
- 20: hoist pulley
- 22: first deflection pulley
- 24: second deflection pulley
- 26: third deflection pulley
- 28: fourth deflection pulley
- 30: fifth deflection pulley
- 32: tool head
- 34: first telescopic interface
- 36: second telescopic interface
- 38: pull sleeve
- 40: stop cam
- 42: end sleeve
- 44: back handle
- 46: channel
- 48: plastic tube
- 50: fixation
- 52: guiding pulley
- 54: fixing point

## Claims

1. Telescopic hand tool (10), in particular a telescopic pruner, the telescopic hand tool (10) comprises:
- an outer tube (12),
- at least one intermediate tube (14) slidable within the outer tube (12),
- an inner tube (16) slidable within the intermediate tube (14),
- at least one tool head (32) connected or connectable to the front end of the inner tube (16),
- a back handle (44) detachably arranged at the back end of the outer tube (12),
- a pulling means (18) arranged substantially inside the tubes (12, 14, 16), wherein one end of the pulling means (18) is connected to the back handle (44), while another end of the pulling means (18) is connected to a fixing point (54) at the front end of the outer tube (12),
- a number of deflection pulleys (22, 24, 26, 28, 30) arranged at the back ends of the tubes (12, 14, 16) and at the front ends of the outer tube (12) and intermediate tube (14), wherein the deflection pulleys (22, 24, 26, 28, 30) are provided for redirecting the pulling means (18),
- a hoist pulley (20) slidable within the inner tube (16) and connected to the tool head (32) by at least one rod, band, or further cord, wherein the hoist pulley (20) is provided for redirecting the pulling means (18),
- a pull sleeve (38) connected to the pulling means (18) and slidable along the outer tube (12), and
- at least one elongated channel (46) arranged at the outer side of the outer tube (12) and extending parallel to the longitudinal axis of said outer tube (12), wherein
- at least one portion of the pulling means (18) is guided within the channel (46).

2. Telescopic hand tool (10) according to claim 1,
**characterised in that**
the telescopic hand tool (10) includes at least two telescopic interfaces (34, 36), wherein a first telescopic interface (34) connects the outer tube (12) and the intermediate tube (14), while a second telescopic interface (36) connects the intermediate tube (14) and the inner tube (16).

3. Telescopic hand tool (10) according to claim 1 or 2,
**characterised in that**
the channel (46) has an Ω-shaped cross-section.

4. Telescopic hand tool (10) according to claim 3,
**characterised in that**
a first portion of the pulling means (18) extending between the back handle (44) and a first deflection pulley (22) arranged at the front end of the outer tube (12) is guided within the channel (46), wherein the pull sleeve (38) is connected to the first portion of the pulling means (18), and wherein preferably the first deflection pulley (22) is arranged at the outer side of the outer tube (12) and inside the first telescopic interface (34).

5. Telescopic hand tool (10) according to claim 4,
**characterised in that**
a second portion of the pulling means (18) extending between the first deflection pulley (22) and a second deflection pulley (24) arranged at or close to the back end of the outer tube (12), wherein the second portion of the pulling means (18) is guided within the channel (46).

6. Telescopic hand tool (10) according to the claims 3 to 5, **characterised in that**
the first portion and the second portion of the pulling means (18) are guided within one channel (46), wherein the first portion and the second portion of the pulling means (18) are arranged next to one another within the channel (46), and wherein preferably the first portion and the second portion of the pulling means (18) are arranged side-by-side in a radial direction relating to the outer tube (12).

7. Telescopic hand tool (10) according to the claims 3 to 5, wherein the pulling means (18) is formed as a circular cord having a circular cross-section,
wherein the telescopic cutting tool (10) is **characterised in that**
two parallel elongated channels (46) are arranged at the outer side of the outer tube (12), and are arranged parallel to each other,
wherein the first portion of the circular cord is guided within one of the two channels, and the second portion of the circular cord is guided within the other one of said two channels.

8. Telescopic hand tool (10) according to any one of the preceding claims,
**characterised in that**
an end sleeve (42) is arranged at the back end of the outer tube (12), wherein preferably the second deflection pulley (24) is arranged inside said end sleeve (42) and the back handle (44) is detachably mounted at the end sleeve (42).

9. Telescopic hand tool (10) according to claim 8, **characterised in that**
a stop cam (40) is attached at the outer side of the outer tube (12), wherein the pull sleeve (38) is slidable between said stop cam (40) and the end sleeve (42).

10. Telescopic hand tool (10) according to any one of the preceding claims,
**characterised in that**
the deflection pulleys (22, 24, 26, 28, 30) and/or the hoist pulley (20) are provided for redirecting the pulling means (18) by about 180 degrees.

11. Telescopic hand tool (10) according to any one of the preceding claims,
**characterised in that**
a guiding pulley is dedicated to at least one deflection pulley (22, 24, 26, 28, 30), so that the pulling means (18) takes an S-shaped course between the guiding pulley and the corresponding deflection pulley (22, 24, 26, 28, 30).

12. Telescopic hand tool (10) according to any one of the claims 3 to 11,
**characterised in that**
a plastic tube (48) encloses partially the outer tube (12) and covers a part of the at least one channel (46), wherein preferably the plastic tube (48) extends between the first telescopic interface (34) and the stop cam (40).

13. Telescopic hand tool (10) according to any one of the preceding claims,
**characterised in that**
the back handle (44) is formed as a T-shaped handle.

14. Telescopic hand tool (10) according to any one of the preceding claims,
**characterised in that**
a maximum length of the telescopic hand tool (10) is between 3 m and 5 m, in particular about 4 m, while a minimum length of the telescopic hand tool (10) is between 1.5 m and 2.0 m, in particular about 1.7 m.

15. Telescopic hand tool (10) according to any one of the preceding claims,
**characterised in that**
the telescopic hand tool (10) comprises one or more further intermediate tubes, wherein the further intermediate tube includes at least two deflection pulleys arranged at the front end and back end, respectively, of the said further intermediate tube, and wherein the further intermediate tube is arranged between the outer tube (12) and intermediate tube (14) and/or between the intermediate tube (14) and the inner tube (16).

## Patentansprüche

1. Teleskopisches Handwerkzeug (10), insbesondere eine teleskopische Gartenschere, wobei das teleskopische Handwerkzeug (10) Folgendes umfasst:
- ein Außenrohr (12),
- mindestens ein Zwischenrohr (14), das innerhalb des Außenrohrs (12) verschiebbar ist,
- ein Innenrohr (16), das innerhalb des Zwischenrohrs (14) verschiebbar ist,
- mindestens einen Werkzeugkopf (32), der mit dem vorderen Ende des Innenrohrs (16) verbunden oder verbindbar ist,
- einen hinteren Griff (44), der lösbar am hinteren Ende des Außenrohrs (12) angeordnet ist,
- ein Zugmittel (18), das im Wesentlichen innerhalb der Rohre (12, 14, 16) angeordnet ist, wobei ein Ende des Zugmittels (18) mit dem hinteren Griff (44) verbunden ist, während ein anderes Ende des Zugmittels (18) mit einem Befestigungspunkt (54) am vorderen Ende des Außenrohrs (12) verbunden ist,
- eine Anzahl von Umlenkrollen (22, 24, 26, 28, 30), die an den hinteren Enden der Rohre (12, 14, 16) und an den vorderen Enden des Außenrohrs (12) und des Zwischenrohrs (14) angeordnet sind, wobei die Umlenkrollen (22, 24, 26, 28, 30) zum Umlenken des Zugmittels (18) bereitgestellt sind,
- eine Hubseilrolle (20), die innerhalb des Innenrohrs (16) verschiebbar ist und mit dem Werkzeugkopf (32) durch mindestens eine Stange, ein Band oder eine weitere Schnur verbunden ist, wobei die Hubseilrolle (20) zum Umlenken des Zugmittels (18) bereitgestellt ist,
- eine Zughülse (38), die mit dem Zugmittel (18) verbunden und entlang des Außenrohrs (12) verschiebbar ist, und
- mindestens einen länglichen Kanal (46), der an der Außenseite des Außenrohrs (12) angeordnet ist und sich parallel zur Längsachse des Außenrohrs (12) erstreckt, wobei
- mindestens ein Abschnitt des Zugmittels (18) innerhalb des Kanals (46) geführt ist.

2. Teleskopisches Handwerkzeug (10) nach Anspruch 1,
**dadurch gekennzeichnet, dass**
das teleskopische Handwerkzeug (10) mindestens zwei Teleskopschnittstellen (34, 36) einschließt, wobei eine erste Teleskopschnittstelle (34) das Außenrohr (12) und das Zwischenrohr (14) verbindet, während eine zweite Teleskopschnittstelle (36) das Zwischenrohr (14) und das Innenrohr (16) verbindet.

3. Teleskopisches Handwerkzeug (10) nach Anspruch 1 oder 2,
**dadurch gekennzeichnet, dass**
der Kanal (46) einen Ω-förmigen Querschnitt aufweist.

4. Teleskopisches Handwerkzeug (10) nach Anspruch 3,
**dadurch gekennzeichnet, dass**
ein erster Abschnitt des Zugmittels (18), der sich zwischen dem hinteren Griff (44) und einer ersten Umlenkrolle (22) erstreckt, die am vorderen Ende des Außenrohrs (12) angeordnet ist, innerhalb des Kanals (46) geführt wird, wobei die Zughülse (38) mit dem ersten Abschnitt des Zugmittels (18) verbunden ist, und wobei vorzugsweise die erste Umlenkrolle (22) an der Außenseite des Außenrohrs (12) und innerhalb der ersten Teleskopschnittstelle (34) angeordnet ist.

5. Teleskopisches Handwerkzeug (10) nach Anspruch 4,
**dadurch gekennzeichnet, dass**
sich ein zweiter Abschnitt des Zugmittels (18) zwischen der ersten Umlenkrolle (22) und einer zweiten Umlenkrolle (24) erstreckt, die am oder nahe dem hinteren Ende des Außenrohrs (12) angeordnet ist, wobei der zweite Abschnitt des Zugmittels (18) innerhalb des Kanals (46) geführt wird.

6. Teleskopisches Handwerkzeug (10) nach den Ansprüchen 3 bis 5,
**dadurch gekennzeichnet, dass**
der erste Abschnitt und der zweite Abschnitt des Zugmittels (18) innerhalb eines Kanals (46) geführt werden, wobei der erste Abschnitt und der zweite Abschnitt des Zugmittels (18) nebeneinander innerhalb des Kanals (46) angeordnet sind, und wobei vorzugsweise der erste Abschnitt und der zweite Abschnitt des Zugmittels (18) nebeneinander in einer radialen Richtung bezüglich des Außenrohrs (12) angeordnet sind.

7. Teleskopisches Handwerkzeug (10) nach den Ansprüchen 3 bis 5, wobei das Zugmittel (18) als kreisförmige Schnur mit kreisförmigem Querschnitt ausgebildet ist,
wobei das teleskopische Schneidewerkzeug (10)
**dadurch gekennzeichnet ist, dass**
zwei parallele längliche Kanäle (46) an der Außenseite des Außenrohrs (12) angeordnet und parallel zueinander angeordnet sind,
wobei der erste Abschnitt der kreisförmigen Schnur in einem der zwei Kanäle geführt wird und der zweite Abschnitt der kreisförmigen Schnur in dem anderen der zwei Kanäle geführt wird.

8. Teleskopisches Handwerkzeug (10) nach einem der vorstehenden Ansprüche,
**dadurch gekennzeichnet, dass**
eine Endhülse (42) am hinteren Ende des Außenrohrs (12) angeordnet ist, wobei vorzugsweise die zweite Umlenkrolle (24) innerhalb der Endhülse (42) angeordnet ist und der hintere Griff (44) lösbar an der Endhülse (42) montiert ist.

9. Teleskopisches Handwerkzeug (10) nach Anspruch 8,
**dadurch gekennzeichnet, dass**
ein Anschlagnocken (40) an der Außenseite des Außenrohrs (12) befestigt ist, wobei die Zughülse (38) zwischen dem Anschlagnocken (40) und der Endhülse (42) verschiebbar ist.

10. Teleskopisches Handwerkzeug (10) nach einem der vorstehenden Ansprüche,
**dadurch gekennzeichnet, dass**
die Umlenkrollen (22, 24, 26, 28, 30) und/oder die Hubseilrolle (20) zum Umlenken des Zugmittels (18) um etwa 180 Grad bereitgestellt sind.

11. Teleskopisches Handwerkzeug (10) nach einem der vorstehenden Ansprüche,
**dadurch gekennzeichnet, dass**
eine Führungsrolle mindestens einer Umlenkrolle (22, 24, 26, 28, 30) zugeordnet ist, so dass das Zugmittel (18) einen S-förmigen Verlauf zwischen der Führungsrolle und der entsprechenden Umlenkrolle (22, 24, 26, 28, 30) nimmt.

12. Teleskopisches Handwerkzeug (10) nach einem der Ansprüche 3 bis 11,
**dadurch gekennzeichnet, dass**
ein Kunststoffrohr (48) teilweise das Außenrohr (12) umschließt und einen Teil des mindestens einen Kanals (46) bedeckt, wobei sich das Kunststoffrohr (48) vorzugsweise zwischen der ersten Teleskopschnittstelle (34) und dem Anschlagnocken (40) erstreckt.

13. Teleskopisches Handwerkzeug (10) nach einem der vorstehenden Ansprüche,
**dadurch gekennzeichnet, dass**
der hintere Griff (44) als T-förmiger Griff ausgebildet ist.

14. Teleskopisches Handwerkzeug (10) nach einem der vorstehenden Ansprüche,
**dadurch gekennzeichnet, dass**
eine maximale Länge des teleskopischen Handwerkzeugs (10) zwischen 3 m und 5 m beträgt, insbesondere etwa 4 m, während eine minimale Länge des teleskopischen Handwerkzeugs (10) zwischen 1,5 m und 2,0 m beträgt, insbesondere etwa 1,7 m.

15. Teleskopisches Handwerkzeug (10) nach einem der vorstehenden Ansprüche,
**dadurch gekennzeichnet, dass**
das teleskopische Handwerkzeug (10) ein oder mehrere weitere Zwischenrohre umfasst, wobei das weitere Zwischenrohr mindestens zwei Umlenkrollen einschließt, die am vorderen Ende bzw. am hinteren Ende des weiteren Zwischenrohrs angeordnet sind, und wobei das weitere Zwischenrohr zwischen dem Außenrohr (12) und dem Zwischenrohr (14) und/oder zwischen dem Zwischenrohr (14) und dem Innenrohr (16) angeordnet ist.

## Revendications

1. Outil à main télescopique (10), en particulier dispositif d'élagage télescopique, l'outil à main télescopique (10) comprend :
- un tube extérieur (12),
- au moins un tube intermédiaire (14) pouvant coulisser à l'intérieur du tube extérieur (12),
- un tube intérieur (16) pouvant coulisser à l'intérieur du tube intermédiaire (14),
- au moins une tête d'outil (32) reliée ou pouvant être reliée à l'extrémité avant du tube intérieur (16),
- une poignée arrière (44) agencée de manière amovible à l'extrémité arrière du tube extérieur (12),
- un moyen de traction (18) agencé sensiblement à l'intérieur des tubes (12, 14, 16), dans lequel une extrémité du moyen de traction (18) est reliée à la poignée arrière (44), tandis qu'une autre extrémité du moyen de traction (18) est reliée à un point de fixation (54) au niveau de l'extrémité avant du tube extérieur (12),
- un certain nombre de poulies de déviation (22, 24, 26, 28, 30) agencées au niveau des extrémités arrière des tubes (12, 14, 16) et au niveau des extrémités avant du tube extérieur (12) et du tube intermédiaire (14), dans lequel les poulies de déviation (22, 24, 26, 28, 30) sont prévues pour rediriger les moyens de traction (18),
- une poulie de levage (20) pouvant coulisser à l'intérieur du tube intérieur (16) et reliée à la tête d'outil (32) par au moins une tige, une bande ou un câble supplémentaire, dans lequel la poulie de levage (20) est prévue pour rediriger les moyens de traction (18),
- un manchon de traction (38) relié au moyen de traction (18) et pouvant coulisser le long du tube extérieur (12), et
- au moins un canal allongé (46) agencé au niveau du côté extérieur du tube extérieur (12) et s'étendant parallèle à l'axe longitudinal dudit tube extérieur (12), dans lequel
- au moins une partie du moyen de traction (18) est guidée à l'intérieur du canal (46).

2. Outil à main télescopique (10) selon la revendication 1,
**caractérisé en ce que**
l'outil à main télescopique (10) comporte au moins deux interfaces télescopiques (34, 36), dans lequel une première interface télescopique (34) relie le tube extérieur (12) et le tube intermédiaire (14), tandis qu'une seconde interface télescopique (36) relie le tube intermédiaire (14) et le tube intérieur (16).

3. Outil à main télescopique (10) selon la revendication 1 ou 2, **caractérisé en ce que**
le canal (46) a une section transversale en forme de Ω.

4. Outil à main télescopique (10) selon la revendication 3,
**caractérisé en ce que**
une première partie du moyen de traction (18) s'étendant entre la poignée arrière (44) et une première poulie de déviation (22) agencée au niveau de l'extrémité avant du tube extérieur (12) est guidée à l'intérieur du canal (46), dans lequel le manchon de traction (38) est relié à la première partie du moyen de traction (18), et dans lequel de préférence la première poulie de déviation (22) est agencée au niveau du côté extérieur du tube extérieur (12) et à l'intérieur de la première interface télescopique (34).

5. Outil à main télescopique (10) selon la revendication 4,
**caractérisé en ce que**
une seconde partie du moyen de traction (18) s'étendant entre la première poulie de déviation (22) et une seconde poulie de déviation (24) agencée au niveau ou à proximité de l'extrémité arrière du tube extérieur (12), dans lequel la seconde partie du moyen de traction (18) est guidée à l'intérieur du canal (46).

6. Outil à main télescopique (10) selon les revendications 3 à 5, **caractérisé en ce que**
la première partie et la seconde partie du moyen de traction (18) sont guidées à l'intérieur d'un canal (46), dans lequel la première partie et la seconde partie du moyen de traction (18) sont disposées l'une à côté de l'autre à l'intérieur du canal (46), et dans lequel, de préférence, la première partie et la seconde partie du moyen de traction (18) sont agencées côte à côte dans une direction radiale relative au tube extérieur (12).

7. Outil à main télescopique (10) selon les revendications 3 à 5, dans lequel le moyen de traction (18) est formé comme un cordon circulaire ayant une coupe transversale circulaire,
dans lequel l'outil de coupe télescopique (10) est **caractérisé en ce que**
deux canaux allongés parallèles (46) sont agencés au niveau du côté extérieur du tube extérieur (12), et sont agencés parallèlement l'un à l'autre,
dans lequel la première partie du cordon circulaire est guidée à l'intérieur de l'un des deux canaux, et la seconde partie du cordon circulaire est guidée à l'intérieur de l'autre desdits deux canaux.

8. Outil à main télescopique (10) selon l'une quelconque des revendications précédentes,
**caractérisé en ce que**
un manchon d'extrémité (42) est agencé au niveau de l'extrémité arrière du tube extérieur (12), dans lequel de préférence la seconde poulie de déviation (24) est agencée à l'intérieur dudit manchon d'extrémité (42) et la poignée arrière (44) est montée de manière amovible au niveau du manchon d'extrémité (42).

9. Outil à main télescopique (10) selon la revendication 8,
**caractérisé en ce que**
une came d'arrêt (40) est fixée au niveau du côté extérieur du tube extérieur (12), dans lequel le manchon de traction (38) peut coulisser entre ladite came d'arrêt (40) et le manchon d'extrémité (42).

10. Outil à main télescopique (10) selon l'une quelconque des revendications précédentes,
**caractérisé en ce que**
les poulies de déviation (22, 24, 26, 28, 30) et/ou la poulie de levage (20) sont prévues pour rediriger les moyens de traction (18) d'environ 180 degrés.

11. Outil à main télescopique (10) selon l'une quelconque des revendications précédentes,
**caractérisé en ce que**
une poulie de guidage est dédiée à au moins une poulie de déviation (22, 24, 26, 28, 30), de sorte que le moyen de traction (18) suit une trajectoire en forme de S entre la poulie de guidage et la poulie de déviation correspondante (22, 24, 26, 28, 30).

12. Outil à main télescopique (10) selon l'une quelconque des revendications 3 à 11,
**caractérisé en ce que**
un tube en plastique (48) entoure partiellement le tube externe (12) et couvre une partie de l'au moins un canal (46), dans lequel de préférence le tube en plastique (48) s'étend entre la première interface télescopique (34) et la came d'arrêt (40).

13. Outil à main télescopique (10) selon l'une quelconque des revendications précédentes,
**caractérisé en ce que**
la poignée arrière (44) est formée comme une poignée en forme de T.

14. Outil à main télescopique (10) selon l'une quelconque des revendications précédentes,
**caractérisé en ce que**
une longueur maximale de l'outil à main télescopique (10) est comprise entre 3 m et 5 m, en particulier environ 4 m, tandis qu'une longueur minimalede l'outil à main télescopique (10) est comprise entre 1,5 m et 2,0 m, en particulier environ 1,7 m.

15. Outil à main télescopique (10) selon l'une quelconque des revendications précédentes,
**caractérisé en ce que**
l'outil à main télescopique (10) comprend un ou plusieurs autres tubes intermédiaires, dans lequel l'autre tube intermédiaire comporte au moins deux poulies de déviation agencées au niveau de l'extrémité avant et de l'extrémité arrière, respectivement, dudit autre tube intermédiaire, et dans lequel l'autre tube intermédiaire est agencé entre le tube extérieur (12) et le tube intermédiaire (14) et/ou entre le tube intermédiaire (14) et le tube intérieur (16).
